# EUROPEAN PATENT APPLICATION

(11) **EP 2 228 648 A2**
(43) Date of publication of application: **15.09.2010**
(21) Application number: 10250388.5
(22) Date of filing: 04.03.2010
(51) Int. Cl.: G01N 27/68, G01N 15/06

(54) **Particulate matter detection device**

(30) Priority: 12.03.2009 JP 2009058852
(71) Applicant: NGK Insulators, Ltd., Nagoya-shi, Aichi 467-8530 (JP)
(72) Inventor: Masahiro Tokuda, Aichi-ken, 467-8530 (JP)
(74) Representative: Paget, Hugh Charles Edward

(57) **Abstract**

A particulate matter detection device (100) includes a detection device body (1) that extends in one direction and has at least one through-hole (2) that is formed at one end of the detection device body (1), a high-voltage electrode (11) and a low-voltage electrode (12) that are buried in the wall of the detection device body (1) that defines the through-hole (2), a high-voltage takeout lead terminal (11a) that is disposed on the surface of the detection device body (1), a high-voltage takeout lead terminal insulating member (20) that has a tubular shape and is disposed to cover at least an area in which the high-voltage takeout lead terminal (11a) is disposed, and a detection device outer tube (30) that is formed of a metal material and is disposed to cover the high-voltage takeout lead terminal insulating member (20), the particulate matter detection device (100) being configured so that particulate matter contained in a fluid that flows into the through-hole (2) can be electrically adsorbed on the wall surface of the through-hole (2), and the particulate matter adsorbed on the wall surface of the through-hole (2) can be detected by measuring a change in electrical properties of the wall that defines the through-hole (2).

## Description

### BACKGROUND OF THE INVENTION

The present invention relates to a particulate matter detection device. More particularly, the present invention relates to a particulate matter detection device that has a reduced size, shows only a small measurement error, and can be produced inexpensively.

A flue exhaust gas or a diesel engine exhaust gas contains particulate matter (PM) such as soot or the like and has been a cause for air pollution. A filter (diesel particulate filter : DPF) made of a ceramic or the like has been widely used to remove a particulate matter. The ceramic DPF can be used for a long period of time, but may suffer defects such as cracks or erosion due to thermal deterioration or the like, so that a small amount of particulate matter may leak from the DPF. It is very important to immediately detect such occurrence of the defects and to recognize the abnormality of a device from the viewpoint of preventing air pollution.

Such defects may be detected by providing a particulate matter detection device on the downstream side of the DPF (e.g., JP-A-60-123761).

### SUMMARY OF THE INVENTION

According to JP-A-60-123761, the particulate matter is charged by causing a corona discharge, and an ion current due to the charged particulate matter is measured to determine the amount of the particulate matter. According to this method, since the ion current due to the charged particulate matter is weak, there has been a problem that a large-scale detection circuit is required for detecting such a weak ion current so that cost increases. Moreover, since the particulate matter cannot be effectively charged when the exhaust gas flow rate is large, the amount of particulate matter measured may be smaller than the amount of particulate matter actually contained in the exhaust gas. Therefore, there has also been a problem that a large error occurs.

The present invention was conceived in view of the above problems. An object of the present invention is to provide a particulate matter detection device that has a reduced size, shows only a small measurement error, and can be produced inexpensively.

To achieve the above object, according to the present invention, there is provided a particulate matter detection device as follows.

[1] A particulate matter detection device comprising:
a detection device body that extends in one direction and has at least one through-hole that is formed at one end of the detection device body;
at least one pair of electrodes that are buried in the wall of the detection device body that defines the through-hole, and are covered with a dielectric, the at least one pair of electrodes including a low-voltage electrode and a high-voltage electrode;
a low-voltage takeout lead terminal that is electrically connected to the low-voltage electrode, and disposed at the other end of the detection device body;
a high-voltage takeout lead terminal that is electrically connected to the high-voltage electrode, and disposed on the surface of the detection device body at a position between the one end and the other end of the detection device body;
a high-voltage takeout lead terminal insulating member that has a tubular shape and is formed of an electrically insulating ceramic, a through-hole being formed in the high-voltage takeout lead terminal insulating member from one end face to the other end face of the high-voltage takeout lead terminal insulating member, the detection device body being inserted into the through-hole so that at least an area of the detection device body in which the high-voltage takeout lead terminal is disposed is covered with the high-voltage takeout lead terminal insulating member; and
a detection device outer tube that is formed of a metal material, and disposed to cover at least the high-voltage takeout lead terminal insulating member while allowing an area of the one end of the detection device body in which the through-hole is formed to be exposed,
the particulate matter detection device being configured so that charged particulate matter contained in a fluid that flows into the through-hole at the one end of the detection device body, or particulate matter that is contained in a fluid that flows into the through-hole and is charged by a discharge that occurs in the through-hole due to application of a voltage between the pair of electrodes, can be electrically adsorbed on the wall surface of the through-hole, and the particulate matter adsorbed on the wall surface of the through-hole can be detected by measuring a change in electrical properties of the wall that defines the through-hole.

[2] The particulate matter detection device according to [1],
wherein the through-hole that is formed in the high-voltage takeout lead terminal insulating member includes:
a first through-hole that is formed in a given range from the one end face of the high-voltage takeout lead terminal insulating member so that the cross section of the first through-hole perpendicular to its extension direction has a size almost equal to the size of the cross section of the detection device body perpendicular to the longitudinal direction of the detection device body; and
a second through-hole that is formed from the first through-hole to the other end face of the high-voltage takeout lead terminal insulating member so that the cross section of the second through-hole perpendicular to its extension direction is larger than that of the first through-hole on the side of the detection device body where the high-voltage takeout lead terminal is disposed.

[3] The particulate matter detection device according to [2], wherein an opening that is formed in the second through-hole between the detection device body and the high-voltage takeout lead terminal insulating member is filled with an electrically insulating inorganic powder.

[4] The particulate matter detection device according to [2] or [3], further comprising:
a first cap member that is disposed inside the detection device outer tube to come in contact with the one end face of the high-voltage takeout lead terminal insulating member; and
a second cap member that is disposed inside the detection device outer tube to come in contact with the other end face of the high-voltage takeout lead terminal insulating member.

[5] The particulate matter detection device according to any one of [1] to [4], wherein the high-voltage takeout lead terminal insulating member is formed of at least one ceramic selected from the group consisting of alumina, cordierite, mullite, glass, zirconia, magnesia, titania, and silicon.

[6] The particulate matter detection device according to any one of [1] to [5], wherein a line is electrically connected to the high-voltage takeout lead terminal disposed on the detection device body, and the high-voltage takeout lead terminal and the line are covered with an electrically insulating adhesive.

The particulate matter detection device according to the present invention is configured so that at least one pair of electrodes are buried in the wall of the detection device body that defines the through-hole, and particulate matter present in the through-hole can be charged by causing a discharge to occur in the through-hole by applying a voltage between the pair of electrodes, and electrically adsorbed on the electrode (i.e., the wall surface of the through-hole). This makes it possible to measure the mass of particulate matter contained in exhaust gas that flows on the downstream side of a DPF and has flowed into the through-hole. Specifically, particulate matter that has flowed into the through-hole is measured instead of directly measuring particulate matter contained in the entire exhaust gas that flows on the downstream side of the DPF. The amount of particulate matter contained in the entire exhaust gas can be roughly estimated from the measured value. This makes it possible to measure only a small amount of particulate matter that cannot be detected by a related-art inspection method.

Since the particulate matter detection device according to the present invention is not configured to measure the total amount of particulate matter contained in exhaust gas just as explained above, the size of the particulate matter detection device can be reduced. Therefore, the particulate matter detection device can be installed in a narrow space such as an automotive exhaust system. Moreover, the particulate matter detection device can be produced inexpensively due to a reduction in size.

Since the particulate matter detection device according to the present invention allows only part of exhaust gas (i.e., particulate matter contained in exhaust gas) to be introduced into the through-hole, particulate matter introduced into the through-hole can be effectively charged even if the total flow rate of exhaust gas that flows on the downstream side of the DPF is large, so that a measured value with only a small error can be obtained.

Since the detection device body is formed to extend in one direction and has the through-hole that is formed at one end of the detection device body, and at least one pair of electrodes is disposed (buried) at one end of the detection device body, only the through-hole and part of the pair of electrodes can be inserted into a pipe through which high-temperature exhaust gas flows while allowing the other end of the detection device body to be positioned outside the pipe. Therefore, an area such as takeout lead terminals of the pair of electrodes for which exposure to high temperature is not desirable can be positioned outside the pipe, so that an accurate and stable measurement can be implemented.

As already stated above, it is necessary to apply a high voltage between the takeout lead terminals of the detection device body so that a discharge occurs in the through-hole formed in the detection device body. When merely reducing the size of the particulate matter detection device, the distance between the high-voltage takeout lead terminal and the detection device outer tube formed of a metal material and disposed to cover the detection device body decreases. As a result, fundamentally unnecessary discharge may occur between the high-voltage takeout lead terminal and the detection device outer tube. This may result in dielectric breakdown. In the particulate matter detection device according to the present invention, however, since the high-voltage takeout lead terminal is covered with the high-voltage takeout lead terminal insulating member formed to have a given shape, the high-voltage takeout lead terminal can be electrically insulated from the detection device outer tube.

### BRIEF DESCRIPTION OF THE DRAWINGS

FIG. 1A is a front view schematically showing a particulate matter detection device according to one embodiment of the present invention.
FIG. 1B is side view showing the particulate matter detection device shown in FIG. 1A.
FIG. 1C is a schematic view showing a cross section cut along A-A' line of the particulate matter detection device shown in FIG. 1B.
FIG. 2A is a front view schematically showing the configuration of a detection device body used for a particulate matter detection device according to one embodiment of the present invention.
FIG. 2B is side view showing the detection device body shown in FIG 2A.
FIG. 2C is a schematic view showing a cross section cut along B-B' line of the detection device body shown in FIG. 2B.
FIG. 3 is a schematic view showing a cross section cut along C-C' line of the detection device body shown in FIG. 2C.
FIG. 4 is a schematic view showing a cross section cut along D-D' line of the detection device body shown in FIG. 2C.
FIG. 5 is a schematic view showing a cross section cut along E-E' line of the detection device body shown in FIG. 2C.
FIG. 6 is a schematic view showing a cross section cut along F-F' line of the detection device body shown in FIG. 2C.
FIG. 7 is a schematic view showing a cross section cut along G-G' line of the detection device body shown in FIG. 2C.
FIG. 8 is a schematic view showing a particulate matter detection device according to another embodiment of the present invention, and corresponds to the cross section of the particulate matter detection device according to one embodiment of the present invention shown in FIG. 5.
FIG. 9A is a schematic view showing the cross section of a particulate matter detection device according to still another embodiment of the present invention that is perpendicular to the center axis and includes a through-hole.
FIG. 9B is a schematic view showing the cross section of a particulate matter detection device according to another embodiment of the present invention that is perpendicular to the center axis and does not include a through-hole.
FIG. 10A is a plan view showing one end face of a high-voltage takeout lead terminal insulating member of a particulate matter detection device of Example 1.
FIG. 10B is a cross-sectional view showing the other end face of the high-voltage takeout lead terminal insulating member shown in FIG. 10A.
FIG. 10C is a cross-sectional view showing a cross section cut along H-H' line of the high-voltage takeout lead terminal insulating member shown in FIG. 10A.
FIG. 10D is a cross-sectional view showing a cross section cut along I-I' line of the high-voltage takeout lead terminal insulating member shown in FIG. 10A.

### DESCRIPTION OF EXEMPLARY EMBODIMENTS

Embodiments of the present invention are described in detail below. Note that the present invention is not limited to the following embodiments. Various modifications and improvements of the design may be appropriately made without departing from the scope of the present invention based on the knowledge of a person having ordinary skill in the art.

### [1] Particulate matter detection device

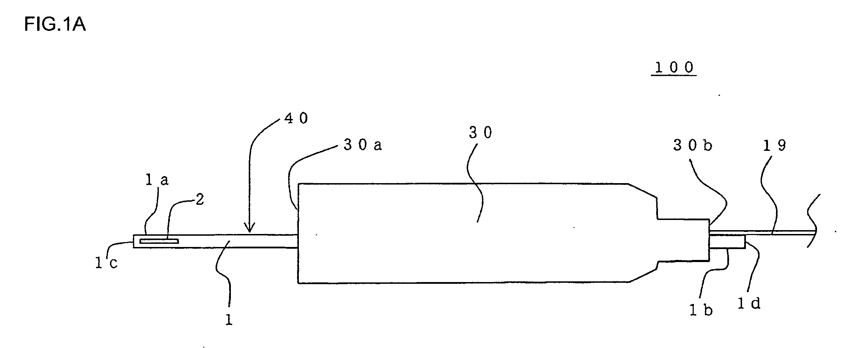

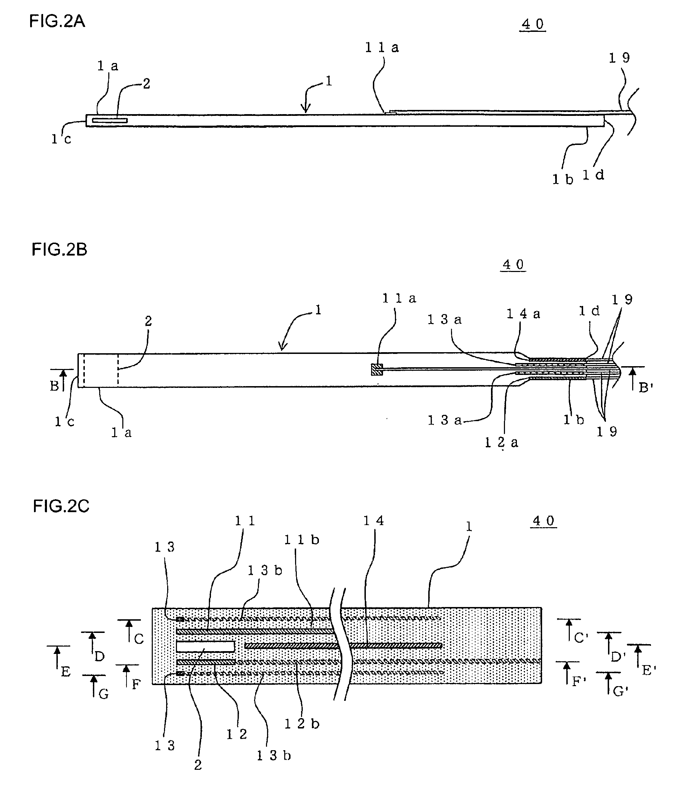

As shown in FIGS. 1A to 1C and 2A to 2C, a particulate matter detection device 100 according to one embodiment of the present invention includes a particulate matter detection sensor section that includes a detection device body 1 that extends in one direction and has at least one through-hole 2 that is formed at one end of the detection device body 1, at least one pair of electrodes 11 and 12 that are disposed (buried) in the wall of the detection device body 1 that defines the through-hole 2, takeout lead terminals 11a and 12b that are respectively electrically connected to the electrodes 11 and 12, and the like (hereinafter may be referred to as "sensor section 40"), a high-voltage takeout lead terminal insulating member 20 that has a tubular shape and is disposed to cover part of the detection device body 1, and a detection device outer tube 30 that is formed of a metal material and is disposed to cover the high-voltage takeout lead terminal insulating member 20.

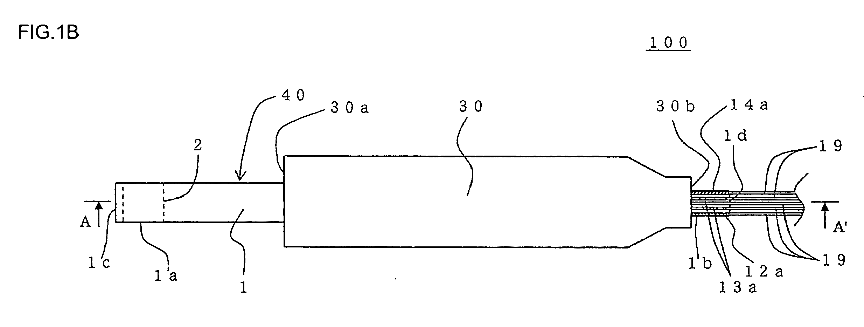

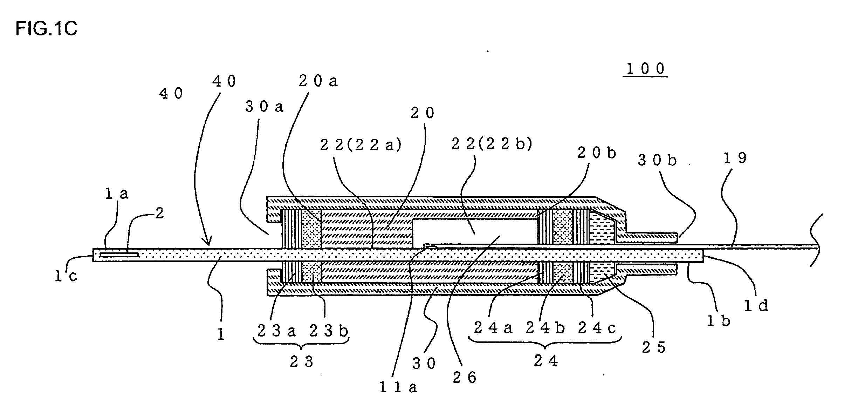

FIG. 1A is a front view schematically showing a particulate matter detection device according to one embodiment of the present invention, FIG. 1B is side view showing the particulate matter detection device shown in FIG. 1A, and FIG. 1C is a schematic view showing a cross section cut along A-A' line of the particulate matter detection device shown in FIG. 1B. FIG. 2A is a front view schematically showing the configuration of a detection device body (i.e., the sensor section) used for a particulate matter detection device according to one embodiment of the present invention, FIG. 2B is side view showing the detection device body shown in FIG. 2A, and FIG 2C is a schematic view showing a cross section cut along B-B' line of the detection device body shown in FIG. 2B. Note that some (e.g., takeout lead terminal 12a) of the takeout lead terminals are omitted in FIGS. 1A, 2A, and 2C.

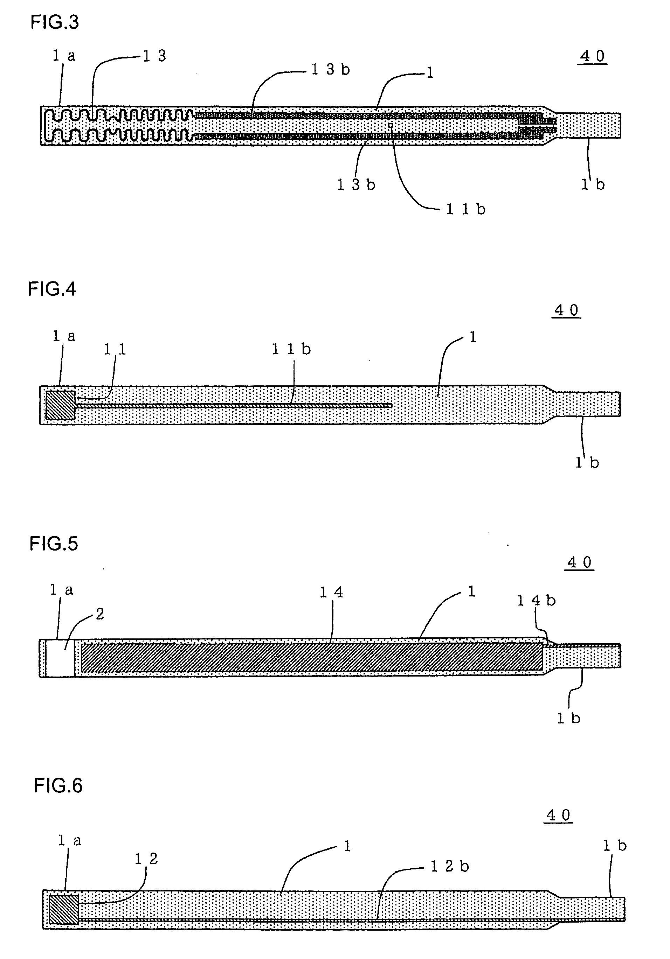

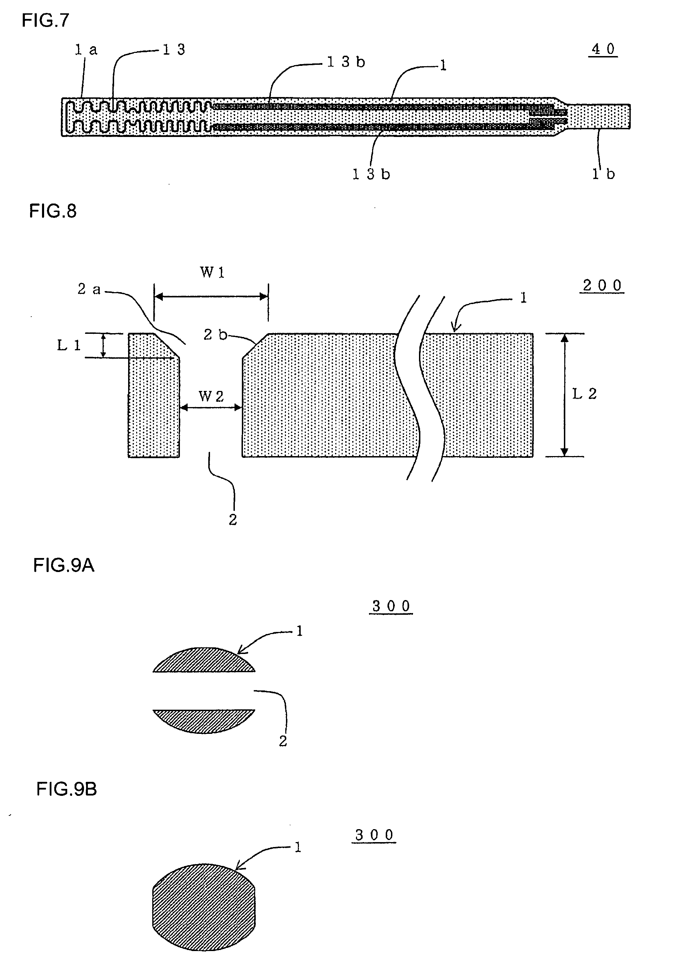

FIG. 3 is a schematic view showing a cross section cut along C-C' line of the detection device body shown in FIG. 2C, FIG. 4 is a schematic view showing a cross section cut along D-D' line of the detection device body shown in FIG. 2C, FIG. 5 is a schematic view showing a cross section cut along E-E' line of the detection device body shown in FIG. 2C, FIG. 6 is a schematic view showing a cross section cut along F-F' line of the detection device body shown in FIG. 2C, and FIG. 7 is a schematic view showing a cross section cut along G-G' line of the detection device body shown in FIG 2C.

As shown in FIGS. 2A to 2C and 3 to 7, the sensor section 40 includes the detection device body 1 that extends in one direction and has at least one through-hole 2 that is formed at one end 1a of the detection device body 1, at least one pair of electrodes 11 and 12 that are disposed (buried) in the wall of the detection device body 1 that defines the through-hole 2, and are covered with a dielectric, the at least one pair of electrodes 11 and 12 including a low-voltage electrode 12 and a high-voltage electrode 11, a low-voltage takeout lead terminal 12a that is electrically connected to the low-voltage electrode 12, and disposed at the other end 1b of the detection device body 1, and a high-voltage takeout lead terminal 11a that is electrically connected to the high-voltage electrode 11, and disposed on the surface of the detection device body 1 at a position between one end 1a and the other end 1b of the detection device body 1.

The detection device body 1 necessarily has at least one through-hole 2, and may have two or more through-holes 2. The particulate matter detection device 100 necessarily includes at least one pair of electrodes 11 and 12, and may have two or more pairs of electrodes 11 and 12.

As shown in FIGS. 1A to 1C and 2A to 2C, in the particulate matter detection device 100 according to this embodiment, the pair of electrodes 11 and 12 are buried in the detection device body 1, and the detection device body 1 is formed of a dielectric so that the pair of electrodes 11 and 12 are covered with the dielectric. The particulate matter detection device 100 according to this embodiment is configured so that charged particulate matter contained in a fluid that flows into the through-hole 2, or particulate matter that is contained in a fluid that flows into the through-hole 2 and is charged by a discharge that occurs in the through-hole 2 due to application of a voltage between the pair of electrodes 11 and 12, can be electrically adsorbed on the wall surface of the through-hole 2. Moreover, the mass of the particulate matter adsorbed on the wall surface of the through-hole 2 can be detected by measuring a change in electrical properties of the wall that defines the through-hole 2. Therefore, particulate matter contained in exhaust gas or the like that passes through the through-hole 2 can be detected using the particulate matter detection device 100 according to this embodiment. This makes it possible to measure only a small amount of particulate matter that has not able be detected by a conventional inspection method.

The mass of particulate matter contained in exhaust gas that flows on the downstream side of a DPF and has flowed into the through-hole 2 can thus be measured using the particulate matter detection device 100 according to this embodiment. Specifically, particulate matter that has flowed into the through-hole 2 is measured instead of directly measuring particulate matter contained in the entire exhaust gas that flows on the downstream side of the DPF. The amount of particulate matter contained in the entire exhaust gas can be roughly estimated from the measured value.

Since the particulate matter detection device 100 according to this embodiment is not configured to measure the total amount of particulate matter contained in exhaust gas as explained above, the size of the particulate matter detection device can be reduced. Therefore, the particulate matter detection device 100 can be installed in a narrow space such as an automotive exhaust system. Moreover, the particulate matter detection device 100 can be produced inexpensively due to a reduction in size.

Since the particulate matter detection device 100 according to this embodiment allows only part of exhaust gas (i.e., particulate matter contained in exhaust gas) to be introduced into the through-hole 2, particulate matter introduced into the through-hole 2 can be effectively charged, even if exhaust gas flows on the downstream side of the DPF at a high flow rate, so that a measured value with only a small error can be obtained.

Since the detection device body 1 is formed to extend in one direction and has the through-hole 2 at one end 1a, and at least one pair of electrodes 11 and 12 are disposed (buried) at one end 1a of the detection device body 1, only the area of the detection device body 1 in which the through-hole 2 and the pair of electrodes 11 and 12 are formed can be inserted into a pipe through which high-temperature exhaust gas flows, while allowing the other end 1b to be positioned outside the pipe. Therefore, an area such as takeout lead terminals 11a and 12a of the pair of electrodes 11 and 12 for which exposure to high temperature is not desirable can be positioned outside the pipe, so that an accurate and stable measurement can be implemented.

In the particulate matter detection device 100 according to this embodiment, the low-voltage takeout lead terminal 12a is disposed at the other end 1b of the detection device body 1, and the high-voltage takeout lead terminal 11a is disposed on the surface of the detection device body 1 at a position between one end 1a and the other end 1b of the detection device body 1. Specifically, the high-voltage takeout lead terminal 11a and the low-voltage takeout lead terminal 12a are spaced apart. This prevents a situation in which a creeping discharge occurs on the surface of the detection device body 1 when applying a voltage between the high-voltage takeout lead terminal 11a and the low-voltage takeout lead terminal 12a in order to apply a voltage between the pair of electrodes 11 and 12.

Note that the term "one end of the detection device body" used herein refers to an area of the detection device body 1 that corresponds to 30% of the total length of the detection device body 1 from one tip portion 1c of the detection device body 1. Note that the term "the other end of the detection device body" used herein refers to an area of the detection device body 1 that corresponds to 30% of the total length of the detection device body 1 from the other tip portion 1d of the detection device body 1. The area between one end 1a and the other end 1b of the detection device body 1 refers to the area of the detection device body 1 other than one end 1a and the other end 1b.

In the particulate matter detection device 100 according to this embodiment, the distance between the high-voltage takeout lead terminal 11a and the low-voltage takeout lead terminal 12a is preferably 5 to 100 mm, and more preferably 10 to 70 mm. If the distance between the high-voltage takeout lead terminal 11a and the low-voltage takeout lead terminal 12a is less than 5 mm, a short circuit due to a creeping discharge may easily occur. If the distance between the high-voltage takeout lead terminal 11a and the low-voltage takeout lead terminal 12a is more than 100 mm, when installing the detection device body 1 of the particulate matter detection device 100 in a pipe or the like so that the high-voltage takeout lead terminal 11a is positioned outside the pipe, the detection device body 1 may protrude from the pipe to a large extent. This makes it difficult to install the detection device body 1 in a narrow space.

The pair of electrodes 11 and 12 and the takeout lead terminals 11a and 12a are electrically connected through lines 11b and 12b that respectively extend from the pair of electrodes 11 and 12 toward the other end 1b of the detection device body 1.

The particulate matter detection device 100 according to this embodiment further includes the high-voltage takeout lead terminal insulating member 20 that has a tubular shape, and the detection device outer tube 30 having a tube shape. The high-voltage takeout lead terminal insulating member 20 is formed of an electrically insulating ceramic. A through-hole 22 extends through the high-voltage takeout lead terminal insulating member 20 from one end face 20a to the other end face 20b of the high-voltage takeout lead terminal insulating member 20. The detection device body 1 is inserted into the through-hole 22 so that at least an area of the detection device body 1 in which the high-voltage takeout lead terminal 11a is disposed is covered with the high-voltage takeout lead terminal insulating member 20. The detection device outer tube 30 is formed of a metal material, and is disposed to cover at least the high-voltage takeout lead terminal insulating member 20 while allowing an area of the one end 1a of the detection device body 1 in which the through-hole 2 is formed to be exposed.

It is necessary to apply a high voltage between the takeout lead terminals 11a and 12a of the particulate matter detection device 100 according to this embodiment so that a discharge occurs in the through-hole 2 formed in the detection device body 1. For example, when merely reducing the size of the particulate matter detection device 100, the distance between the high-voltage takeout lead terminal 11a and the detection device outer tube 30 formed of a metal material decreases so that unnecessary discharge may occur between the high-voltage takeout lead terminal 11a and the detection device outer tube 30. This may result in dielectric breakdown. In the particulate matter detection device 100 according to this embodiment, however, since the high-voltage takeout lead terminal 11a is covered with the high-voltage takeout lead terminal insulating member 20 formed to have a given shape, the high-voltage takeout lead terminal 11a can be electrically insulated from the detection device outer tube 30. This effectively prevents occurrence of dielectric breakdown in the particulate matter detection device 100.

### [1-1] Composition elements of particulate matter detection device

Each composition element of the particulate matter detection device according to this embodiment is described below.

### [1-1a] Detection device body

The detection device body extends in one direction and has at least one through-hole at one end of the detection device body. The detection device body serves as a base of the particulate matter detection device. The detection device body is formed of a dielectric. At least one pair of electrodes are disposed in the wall that defines the through-hole, and a discharge occurs in the through-hole by applying a voltage between the pair of electrodes. Since an area of one end of the detection device body in which the through-hole is formed is inserted into a pipe through which exhaust gas flows when measuring particulate matter contained in exhaust gas, this area is not covered with the high-voltage takeout lead terminal insulating member and the detection device outer tube. Thus, it is exposed to the outside.

The dielectric that forms the detection device body is preferably at least one compound selected from the group consisting of alumina, cordierite, mullite, glass, zirconia, magnesia, and titania. Among these, alumina is preferably used. Electrodes covered with a dielectric can be formed by burying electrodes (high-voltage electrode and low-voltage electrode) in the detection device body that is formed of a dielectric. This ensures that the particulate matter detection device exhibits excellent heat resistance, dielectric breakdown resistance, and the like. The term "dielectric" used herein refers to a substance in which dielectricity is predominant over conductivity and behaves as an insulator for a direct-current voltage.

As shown in FIGS. 2A to 2C, the detection device body 1 is formed to extend in one direction. The longitudinal length of the detection device body 1 is not particularly limited. It is preferable that the detection device body 1 have a length that allows particulate matter contained in exhaust gas to be efficiently sampled when inserted into an exhaust gas pipe.

The thickness of the detection device body 1 (i.e., the dimension of the detection device body 1 in the direction perpendicular (in the thickness direction) to both the "longitudinal direction of the detection device body" and the "gas circulation direction") is not particularly limited, but is preferably about 0.5 to 3 mm, for example. Note that the thickness of the detection device body 1 refers to the maximum thickness of the detection device body 1 in the thickness direction. The dimension of the detection device body 1 in the circulation direction in which gas passes through the through-hole 2 (i.e., the dimension of the detection device body 1 in the gas circulation direction) is not particularly limited, but is preferably about 2 to 20 mm, for example. The longitudinal length of the detection device body 1 is preferably larger than the thickness of the detection device body 1 by a factor of 10 to 100, and larger than the dimension of the detection device body 1 in the gas circulation direction by a factor of 3 to 100.

As shown in FIGS. 2A to 2C, the detection device body 1 may be in the shape of a plate having a rectangular cross-sectional shape perpendicular to the longitudinal direction, or may be in the shape of a rod having a circular or elliptical cross-sectional shape perpendicular to the longitudinal direction, or may have another shape insofar as the detection device body 1 extends in one direction.

The shape and the size of the through-hole 2 are not particularly limited insofar as exhaust gas passes through the through-hole 2 and the amount of particulate matter can be measured. For example, the dimension of the through-hole 2 in the longitudinal direction of the detection device body 1 is preferably about 2 to 20 mm. The width of the area of the through-hole 2 positioned between the pair of electrodes 11 and 12 (i.e., the dimension of the through-hole 2 in the direction perpendicular to both the longitudinal direction of the detection device body and the gas circulation direction) is preferably about 3 to 30 mm.

If the through-hole 2 has dimensions within the above range, exhaust gas containing particulate matter can sufficiently pass through the through-hole 2. Moreover, it is possible to cause a discharge effective for charging particulate matter to occur in the through-hole 2.

It is preferable that at least one of the fluid inlet and the fluid outlet of the through-hole 2 be expanded. If at least one of the fluid inlet and the fluid outlet of the through-hole 2 is expanded, it is possible to more efficiently cause exhaust gas or the like that flows through a pipe to flow into the through-hole of the particulate matter detection device (when the fluid inlet is expanded), or flow out from the through-hole of the particulate matter detection device (when the fluid outlet is expanded).

In a particulate matter detection device (particulate matter detection device 200) according to another embodiment of the present invention shown in FIG. 8, only a fluid inlet 2a of the through-hole 2 is expanded to form an expanded area 2b. In the particulate matter detection device 200 shown in FIG. 8, the through-hole 2 is expanded in the longitudinal direction of the detection device body 1. Note that the through-hole 2 may be expanded in the thickness direction of the detection device body 1. FIG. 8 is a schematic view showing a particulate matter detection device according to another embodiment of the present invention. The cross section of the particulate matter detection device (particulate matter detection device 100) according to one embodiment of the present invention shown in FIG. 5 corresponds to the cross section of the particulate matter detection device shown in FIG. 8.

The width W1 (i.e., the width of the tip portion of the through-hole 2 in the gas circulation direction) of the expanded area 2b is preferably 2 to 200% of the width W2 of the unexpanded area of the through-hole 2. The depth L1 (i.e., the depth of the expanded area) of the expanded area 2b of the through-hole 2 in the gas circulation direction is preferably 5 to 30% of the dimension L2 of the through-hole 2 in the gas circulation direction.

In a particulate matter detection device (particulate matter detection device 300) according to another embodiment of the present invention shown in FIGS. 9A and 9B, the cross-sectional shape of the detection device body 1 in the direction perpendicular to the center axis preferably gradually increases in thickness from the one end toward the center, has the maximum thickness at the center, and gradually decreases in thickness toward the other end in the extension direction of the through-hole 2. If the detection device body has such a shape, exhaust gas sufficiently flows through a pipe when the gas circulation direction of the through-hole coincides with (is parallel to) the circulation direction of exhaust gas in the pipe.

The "center" of the particulate matter detection device (detection device body) in the extension direction of the through-hole refers to the center area when equally dividing the particulate matter detection device in the extension direction of the through-hole into three sections, indicating the "range of one-third" positioned in the center of the particulate matter detection device. Therefore, the expression "has the maximum thickness at the center of the particulate matter detection device in the extension direction of the through-hole" means that an area having the maximum thickness is included in the center area. Now, FIG. 9A is a schematic view showing the cross section of a particulate matter detection device according to another embodiment of the present invention that is perpendicular to the center axis and includes the through-hole, and FIG. 9B is a schematic view showing the cross section of a particulate matter detection device according to another embodiment of the present invention that is perpendicular to the center axis and does not include the through-hole.

In the particulate matter detection device according to this embodiment, it is preferable that the detection device body 1 be formed by stacking a plurality of tape-shaped ceramic (ceramic sheets). In this case, since the sensor section 40 can be formed by stacking a plurality of tape-shaped ceramic while interposing the electrodes (e.g., high-voltage electrode 11 and low-voltage electrode 12), lines, and the like sandwiched between the tape-shaped ceramic , the particulate matter detection device according to this embodiment can be efficiently produced.

### [1-1b] Electrode (high-voltage electrode and low-voltage electrode)

As shown in FIGS. 2A to 2C, the particulate matter detection device according to this embodiment includes a pair of electrodes (high-voltage electrode 11 and low-voltage electrode 12) that are buried in the wall of the detection device body 1 that defines the through-hole 2. The pair of electrodes 11 and 12 are covered with the dielectric on either side of the through-hole 2 sandwiched. A discharge occurs in the through-hole 2 by applying a given voltage between the pair of electrodes 11 and 12.

It suffices that the pair of electrodes 11 and 12 be buried in the wall of the detection device body 1 that defines the through-hole 2. For example, as shown in FIG. 2C, the pair of electrodes 11 and 12 are preferably disposed on either side of the through-hole 2. Note that the pair of electrodes 11 and 12 may be disposed at arbitrary positions in the wall of the detection device body 1 that defines the through-hole 2 insofar as the electrical properties of the wall can be detected and a discharge occurs in the through-hole 2. A plurality of pairs of electrodes may be disposed, and a discharge and electrical property detection may be separately performed using different pairs of electrodes. In this case, a high-voltage electrode and a low-voltage electrode are provided as a pair of discharge electrodes.

The type of discharge is preferably selected from the group consisting of a silent discharge, a streamer discharge, and a corona discharge. In order to cause such a discharge, the particulate matter detection device according to this embodiment preferably further includes a discharge power supply that is connected to the high-voltage takeout lead terminal 11a and the low-voltage takeout lead terminal 12a. The discharge power supply is preferably a high-voltage alternating-current power supply or direct-current power supply, for example. Such discharge power supply may be connected to the high-voltage takeout lead terminal 11a and the low-voltage takeout lead terminal 12a through lines 19 that are respectively electrically connected to the high-voltage takeout lead terminal 11a and the low-voltage takeout lead terminal 12a.

A pulse voltage, an alternating-current voltage (e.g., rectangular wave), or the like is preferably applied when causing a discharge. The applied voltage is preferably 50 to 200 kV/cm, although the applied voltage may vary depending on the gap (distance between the pair of electrodes) and the exhaust gas temperature. The power supplied when applying a voltage is preferably 0.1 to 10 W.

As shown in FIGS. 1A to 1C and 2A to 2C, when particulate matter contained in a fluid (i.e., exhaust gas) that flows into the through-hole 2 is not charged, the particulate matter detection device 100 according to this embodiment causes a discharge to occur in the through-hole 2 so that the particulate matter is charged and electrically adsorbed on the wall surface of the through-hole 2. When particulate matter contained in a fluid that flows into the through-hole 2 has already been charged, the particulate matter need not necessarily be charged again by causing a discharge to occur in the through-hole 2. Specifically, the charged particulate matter is electrically adsorbed on the wall surface of the through-hole 2 without causing a discharge to occur in the through-hole 2.

When charging particulate matter by causing a discharge to occur in the through-hole 2 as discussed above, the charged particulate matter is electrically drawn to the electrode that has a polarity opposite to that of the charged particulate matter during a discharge, and adsorbed on the wall surface of the through-hole 2. On the other hand, when particulate matter has already been charged before the particulate matter flows into the through-hole 2, the charged particulate matter is electrically drawn to the electrode that has a polarity opposite to that of the charged particulate matter by applying a given voltage between the pair of electrodes 11 and 12. When particulate matter has already been charged before the particulate matter flows into the through-hole 2, the voltage applied between the pair of electrodes 11 and 12 is preferably 4 to 40 kV/cm.

The shape and the size of the electrodes 11 and 12 are not particularly limited insofar as a discharge occurs in the through-hole 2. For example, the electrodes 11 and 12 may have a rectangular shape, a circular shape, an elliptical shape, or the like. The electrodes 11 and 12 preferably have a size equal to or larger than 70% of the area of the through-hole 2 when viewed from the side surface.

The thickness of the electrodes 11 and 12 is not particularly limited insofar as a discharge occurs in the through-hole 2. The thickness of the electrodes 11 and 12 is preferably 5 to 30 µm, for example. Examples of the material for the electrodes 11 and 12 include platinum (Pt), molybdenum (Mo), tungsten (W), and the like.

The distance between one (e.g., high-voltage electrode 11) of the pair of electrodes and the through-hole 2 and the distance between the other (e.g., low-voltage electrode 12) of the pair of electrodes and the through-hole 2 is preferably 50 to 500 µm, and more preferably 100 to 300 µm. This ensures that a discharge effectively occurs in the through-hole. The distance between the high-voltage electrode 11 and the through-hole 2 and the distance between the low-voltage electrode 12 and the through-hole 2 refer to the thickness of the dielectric that covers the high-voltage electrode 11 and the low-voltage electrode 12 and faces the through-hole 2.

### [1-1c] Take out lead terminal (high-voltage takeout lead terminal and low-voltage takeout lead terminal)

The lines 11b and 12b respectively extend from the high-voltage electrode 11 and the low-voltage electrode 12 (i.e., a pair of electrodes) toward the other end 1b of the detection device body 1, and are electrically connected to the takeout lead terminals (high-voltage takeout lead terminal 11a and low-voltage takeout lead terminal 12a). The takeout lead terminals are connected to the lines (e.g., line 19) from a power supply or the like used to apply a voltage between the pair of electrodes.

The takeout lead terminal (low-voltage takeout lead terminal 12a) of the low-voltage electrode 12 is disposed at the other end 1b of the detection device body 1. Therefore, the area (i.e., one end 1a) in which the through-hole 2 and the pair of electrodes are disposed can be sufficiently spaced apart from the low-voltage takeout lead terminal 12a. This makes it possible to insert only one end 1a in which the through-hole 2 and the like are formed into a pipe through which high-temperature exhaust gas flows, while allowing the other end 1b at which the low-voltage takeout lead terminal 12a is disposed to be positioned outside the pipe. If the low-voltage takeout lead terminal 12a is exposed to a high temperature, the particulate matter detection accuracy may decrease, so that it may be difficult to stably detect particulate matter, or a contact failure between an electrical terminal and a harness used for external connection may occur and consequently that particulate matter may not be measured) during long-term use. Therefore, particulate matter can be detected accurately and stably by allowing the low-voltage takeout lead terminal 12a to be positioned outside the pipe so that the low-voltage takeout lead terminal 12a is not exposed to a high temperature.

As shown in FIG 2B, the low-voltage takeout lead terminal 12a is preferably disposed on the side surface of the other end 1b of the detection device body 1 to extend in the longitudinal direction of the detection device body 1. It is preferable that the low-voltage takeout lead terminal 12a be disposed at one end of the side surface of the other end 1b of the detection device body 1 in the widthwise direction of the detection device body 1. Moreover, in FIG 2B, the other end 1b of the detection device body 1 has a reduced width. Note that the other end 1b of the detection device body 1 may or may not have a reduced width. The shape and the size of the low-voltage takeout lead terminal 12a are not particularly limited. For example, the low-voltage takeout lead terminal 12a is preferably in the shape of a strip having a width of 0.1 to 2.0 mm and a length of 0.5 to 20 mm. The thickness of the low-voltage takeout lead terminal 12a is not particularly limited, but is preferably about 5 to 1000 µm, for example. Examples of the material for the low-voltage takeout lead terminal 12a include nickel (Ni), platinum (Pt), chromium (Cr), tungsten (W), molybdenum (Mo), aluminum (Al), gold (Au), silver (Ag), copper (Cu), and the like.

The high-voltage takeout lead terminal 11a that is electrically connected to the high-voltage electrode 11 is disposed on the surface of the detection device body 1 at a position between one end 1a and the other end 1b of the detection device body 1. Therefore, the high-voltage takeout lead terminal 11a can be spaced apart from the low-voltage takeout lead terminal 12a. This effectively prevents a situation in which a creeping discharge occurs on the surface of the detection device body 1 when applying a voltage between the takeout lead terminal 11a and the takeout lead terminal 12a in order to apply a voltage between the pair of electrodes 11 and 12.

In the particulate matter detection device 100 according to this embodiment, the distance between the high-voltage takeout lead terminal 11a and the low-voltage takeout lead terminal 12a is preferably 5 to 100 mm, and more preferably 10 to 70 mm. If the distance between the high-voltage takeout lead terminal 11a and the low-voltage takeout lead terminal 12a is less than 5 mm, a short circuit due to a creeping discharge may occur. If the distance between the high-voltage takeout lead terminal 11a and the low-voltage takeout lead terminal 12a is more than 100 mm, when installing the detection device body 1 of the particulate matter detection device 100 in a pipe or the like so that the high-voltage takeout lead terminal 11a is positioned outside the pipe, the detection device body 1 may protrude from the pipe to a large extent. This makes it difficult to install the detection device body 1 in a narrow space.

The distance between the high-voltage takeout lead terminal 11a and the through-hole 2 is preferably 10 mm or more, and more preferably 20 mm or more. If the distance between the high-voltage takeout lead terminal 11a and the through-hole 2 is less than 10 mm, when installing the particulate matter detection device 100 in a pipe so that the through-hole 2 is inserted into the pipe, the high-voltage takeout lead terminal 11a may be affected by the heat of high-temperature exhaust gas that passes through the pipe.

The shape and the size of the high-voltage takeout lead terminal 11a are not particularly limited. For example, the high-voltage takeout lead terminal 11a preferably has a polygonal such as quadrangular) shape having a width of 0.5 to 3 mm and a length of 0.5 to 4 mm. Note that the high-voltage takeout lead terminal 11a may have a circular shape, an elliptical shape, a racetrack shape, or the like. The thickness of the high-voltage takeout lead terminal 11a is not particularly limited, but is preferably about 5 to 1000 µm, for example. Examples of the material for the high-voltage takeout lead terminal 11a include nickel (Ni), platinum (Pt), chromium (Cr), tungsten (W), molybdenum (Mo), aluminum (Al), gold (Au), silver (Ag), copper (Cu), stainless steel, kovar, and the like.

The width of the lines 11b and 12b that electrically connect the electrodes 11 and 12 and the takeout lead terminals 11a and 12a to each other is not particularly limited, but is preferably about 0.7 to 4 mm, for example. The thickness of the lines 11b and 12b is not particularly limited, but is preferably about 5 to 30 µm, for example. The lines 11b and 12b may be formed of the same material as the takeout lead terminals.

The mass of particulate matter may be detected using the particulate matter detection device according to this embodiment by measuring a change in electrical properties of the pair of electrodes 11 and 12 due to adsorption of charged particulate matter on the wall surface of the through-hole. For example, the impedance calculated from the capacitance between the pair of electrodes 11 and 12 is measured, and the mass of particulate matter adsorbed on the wall surface of the through-hole is calculated from a change in impedance to detect the particulate matter (mass) contained in the exhaust gas. Therefore, the particulate matter detection device 100 according to this embodiment preferably further includes a measurement section (not shown) that is connected to the takeout lead terminals 11a and 12a and measures the impedance between the electrodes 11 and 12. Examples of the measurement section include an LCR meter, an impedance analyzer, and the like that can measure impedance in addition to capacitance.

### [1-1d] Heating section

As shown in FIGS. 2C, 3, and 7, the particulate matter detection device according to this embodiment preferably further includes a heating section 13 that is disposed (buried) in the detection device body 1 along the wall surface (i.e., the wall surface that is parallel to the side surface of the detection device body 1) of the through-hole 2. Particulate matter adsorbed on the wall that defines the through-hole 2 can be heated and oxidized using the heating section 13. Moreover, the temperature of the inner space of the through-hole 2 can be adjusted to a desired temperature when measuring the mass of particulate matter so that a change in electrical properties of the wall that defines the through-hole 2 can be stably measured.

The heating section 13 may be in the shape of a wide film. It is preferable that the heating section 13 be formed by disposing a linear metal material in a wave-like manner and turning the metal material in the shape of the letter U at the tip portion. This makes it possible to uniformly heat the inner space of the through-hole. Examples of the material for the heating section 13 include platinum (Pt), molybdenum (Mo), tungsten (W), and the like. The heating section 13 is preferably buried in the detection device body 1 along the wall surface of the through-hole 2. The heating section 13 may be formed to extend toward the other end 1b of the detection device body 1 from the position at which the through-hole 2 is formed. This advantageously reduces the difference in temperature between the inside and the vicinity of the through-hole, so that the element (detection device body) rarely breaks even if the element is rapidly heated. The heating section preferably increases the temperature of the inner space of the through-hole up to 650°C.

In the particulate matter detection device according to this embodiment, it is preferable that at least one heating section 13 be disposed on the side of at least one of the pair of electrodes 11 and 12 opposite to the side on which the through-hole is formed. If the heating section 13 is disposed on the side of at least one of the pair of electrodes 11 and 12 opposite to the side that faces the through-hole, a change in electrical properties of the wall that defines the through-hole 2 can be easily measured by the pair of electrodes 11 and 12 without being affected by the heating section 13. FIG 2C shows an example in which one heating section 13 is respectively disposed on the side of each of the pair of electrodes (i.e., high-voltage electrode 11 and low-voltage electrode 12) opposite to the side that faces the through-hole 2.

An arbitrary number of heating sections 13 may be disposed in an arbitrary arrangement in order to appropriately adjust the temperature and oxidize and remove the collected particulate matter. In FIG. 2C, for example, one heating sections 13 is disposed in the wall that defines the through-hole 2 on the side of each of the electrodes 11 and 12 respectively. Note that a plurality of heating sections may be disposed on the side of each of the electrodes 11 and 12 opposite to the side that faces the through-hole 2. Furthermore, when disposing the heating section in the wall that defines the through-hole 2 on the side of one of the electrodes 11 and 12, the heating section is preferably disposed on the side of the low-voltage electrode 12.

The heating section 13 shown in FIGS. 3 and 7 is connected to lines 13b. Each line 13b is via-connected to each takeout lead terminal 13a (as shown in FIG. 2B). The takeout lead terminal 13a of the heating section 13 is also preferably disposed at the other end 1b of the detection device body 1 in the same manner as the low-voltage takeout lead terminal 12a of the low-voltage electrode 12 in order to avoid the effects of heat when one end 1a of the detection device body 1 is heated. In FIG. 2B, the takeout lead terminal 12a is disposed at one edge of the side surface of the detection device body 1 in the widthwise direction, and the takeout lead terminals 13a, 13a are disposed in two rows adjacent to the takeout lead terminal 12a. Note that the arrangement of the takeout lead terminal 12a and the takeout lead terminals 13a is not limited thereto.

When the heating section 13 is linear, the width of the heating section 13 is not particularly limited, but is preferably about 0.05 to 1 mm, for example. The thickness of the heating section 13 is not particularly limited, but is preferably about 5 to 30 µm, for example. The width of the line 13b is not particularly limited, but is preferably about 0.7 to 4 mm, for example. The thickness of the line 13b is not particularly limited, but is preferably about 5 to 30 µm, for example. The width of the takeout lead terminal 13a connected to the heating section 13 is not particularly limited, but is preferably about 0.1 to 2 mm, for example. The thickness of the takeout lead terminal 13a is not particularly limited, but is preferably about 5 to 1000 µm, for example. Examples of the material for the line 13b and the takeout lead terminal 13a include nickel (Ni), platinum (Pt), chromium (Cr), tungsten (W), molybdenum (Mo), aluminum (Al), gold (Au), silver (Ag), copper (Cu), stainless steel, kovar, and the like.

In addition, the particulate matter detection device according to this embodiment may be configured so that particulate matter absorbed on the wall that defines the through hole or on the pair of the electrodes can be oxidized and removed by causing a discharge (i.e., a discharge that occurs under conditions differing from the conditions when charging particulate matter) to occur in the through-hole by applying a voltage between the pair of electrodes. When oxidizing and removing particulate matter by causing a discharge to occur in the through-hole 2, the field intensity is preferably 10 to 200 kV/cm, and the amount of energy supplied is 0.05 to 10 J/µg with respect to the treatment target substance (particulate matter).

The particulate matter detection device according to this embodiment preferably further includes a heating power supply (not shown) that is connected to the takeout lead terminal of the heating section. The heating power supply may be a constant current power supply or the like.

### [1-1e] Ground electrode

In the particulate matter detection device 100 according to this embodiment, a ground electrode 14 in the shape of a strip may be disposed between the lines 11b and 12b that respectively extend from the pair of electrodes 11 and 12 toward the other end 1b of the detection device body 1, as shown in FIGS. 2C and 5. The ground electrode 14 is an electrode that is grounded.

When using the particulate matter detection device according to this embodiment, a change in electrical properties of the wall that defines the through-hole is measured by detecting given electrical properties between the pair of electrodes to detect particulate matter adsorbed on the wall surface of the through-hole. When detecting given electrical properties between the pair of electrodes, the electrical properties between the two lines that are connected to the pair of electrodes and buried in the dielectric can also be detected.

Therefore, a value detected by both the pair of electrodes and the two lines is obtained as the measured value. When the effects of the electrical properties between the two lines are great, the electrical properties of the wall that defines the through-hole change. Even if the change in electrical properties of the wall that defines the through-hole is detected by the pair of electrodes, the electrical properties between the two lines connected to the pair of electrodes are measured simultaneously. This may make it difficult to accurately measure a change in electrical properties of the wall that defines the through-hole. However, since the particulate matter detection device that includes the ground electrode can detect the electrical properties between the pair of electrodes while suppressing the effects of the lines that extend from the pair of electrodes using the ground electrode, a measurement error due to the lines can be reduced. This makes it possible to more accurately measure a change in electrical properties of the wall that defines the through-hole.

When the particulate matter detection device does not include the ground electrode, a current flows through the dielectric placed between the two lines from the line (one line) connected to the high-voltage electrode to the line (the other line) connected to the low-voltage electrode so that the electrical properties between the two lines are detected, for example. In contrast, when the ground electrode is disposed between the two lines, however, a current flows from one line to the ground electrode, and does not flow from one line to the other line. As a result, the electrical properties between the two lines are not detected. Only the electrical properties of the wall that defines the through-hole positioned between the pair of electrodes can be detected when applying a voltage between the pair of electrodes.

As shown in FIGS. 2A to 2C and 5, when the particulate matter detection device 100 according to this embodiment includes the ground electrode 14 that is in the shape of a strip and is disposed between the lines 11b and 12b that respectively extend from the pair of electrodes 11 and 12, the ground electrode 14 is preferably disposed so that a current does not flow from one (e.g., line 11b) of the lines 11b and 12b to the other line (e.g., line 12b). When vertically moving with respect to the ground electrode 14 and superimposing at least one of the lines 11b and 12b on the ground electrode 14, it is preferable that 95% or more of the line overlaps the ground electrode 14 in the lengthwise direction. It is preferable that the ground electrode 14 be disposed in a plane parallel to the longitudinal direction and the widthwise direction of the detection device body 1.

It is preferable that the width of the ground electrode 14 be 70 to 95% of the width of the detection device body 1, and the length of the ground electrode 14 be 50 to 95% of the length of the detection device body 1. It is more preferable that the width of the ground electrode 14 be 80 to 90% of the width of the detection device body 1, and the length of the ground electrode 14 be 70 to 90% of the length of the detection device body 1. This makes it possible to more effectively prevent a situation in which a current flows from one line to the other line. Here, the "width of the ground electrode 14" refers to the dimension of the ground electrode 14 in the extension direction of the through-hole 2 (fluid circulation direction), and the "width of the detection device body 1" refers to the dimension of the detection device body 1 in the extension direction of the through-hole 2 (fluid circulation direction).

The shape of the ground electrode 14 is not particularly limited. The ground electrode 14 may have a rectangular shape, an elliptical shape, or the like. The thickness of the ground electrode 14 is not particularly limited insofar as a current is prevented from flowing from the line 11b that extends from the electrode 11 to the line 12b that extends from the electrode 12. The thickness of the ground electrode 14 is preferably 10 to 200 µm, for example. Examples of the material for the ground electrode 14 include nickel (Ni), platinum (Pt), chromium (Cr), tungsten (W), molybdenum (Mo), aluminum (Al), gold (Au), silver (Ag), copper (Cu), stainless steel, kovar, and the like.

The distance between the ground electrode 14 and the line 11b and the distance between the ground electrode 14 and the line 12b are preferably 100 to 500 µm, and more preferably 150 to 250 µm. This makes it possible to more effectively prevent a situation in which a current flows from one line to the other line.

A line 14b that extends in the longitudinal direction of the detection device body 1 is connected to the ground electrode 14. The line 14b is via-connected to a takeout lead terminal 14a shown in FIG. 2B at its tip portion (i.e., the tip portion that is not connected to the ground electrode 14).

The width of the line 14b is not particularly limited, but is preferably about 0.2 to 1 mm, for example. The thickness of the line 14b is not particularly limited, but is preferably about 5 to 30 µm, for example. Examples of the material for the line 14b include platinum (Pt), molybdenum (Mo), tungsten (W), and the like.

### [1-1f] High-voltage takeout lead terminal insulating member

As shown in FIGS. 1A to 1C, the particulate matter detection device 100 according to this embodiment includes the high-voltage takeout lead terminal insulating member 20 that is in the shape of a tube and formed of an electrically insulating ceramic, the through-hole 22 being formed in the high-voltage takeout lead terminal insulating member 20 from one end face 20a to the other end face 20b of the high-voltage takeout lead terminal insulating member 20, and the detection device body 1 being inserted into the through-hole 22 so that at least an area of the detection device body 1 in which the high-voltage takeout lead terminal 11a is disposed is covered with the high-voltage takeout lead terminal insulating member 20. The high-voltage takeout lead terminal insulating member 20 is further fitted into and held by the detection device outer tube 30 that serves as an outer tube of the particulate matter detection device 100.

The high-voltage takeout lead terminal insulating member 20 effectively prevents a situation in which dielectric breakdown occurs between the high-voltage takeout lead terminal 11a that is electrically connected to the high-voltage electrode 11 (see FIG. 2C) and the metal detection device outer tube 30 that is disposed to cover part of the detection device body 1, so that the size of the particulate matter detection device 100 can be advantageously reduced.

The shape of the high-voltage takeout lead terminal insulating member 20 is not particularly limited insofar as the high-voltage takeout lead terminal insulating member 20 is disposed between the detection device outer tube 30 and the detection device body 1, and receives the detection device body 1 inserted into the through-hole 22 that extends from one end face 20a to the other end face 20b of the high-voltage takeout lead terminal insulating member 20 so that an area of the detection device body 1 in which the through-hole 2 is formed is exposed from one end face 30a of the detection device outer tube 30. For example, as shown in FIGS. 1A to 1C, it suffices that the high-voltage takeout lead terminal insulating member 20 have a columnar outer circumferential shape that allows the high-voltage takeout lead terminal insulating member 20 to be inserted into the detection device outer tube 30, and have the through-hole 22 into which the detection device body 1 can be inserted, for example.

The through-hole 22 formed in the high-voltage takeout lead terminal insulating member 20 preferably includes a first through-hole 22a that is formed in a given range from one end face 20a of the high-voltage takeout lead terminal insulating member 20 so that the cross section of the first through-hole 22a perpendicular to its extension direction has a size almost equal to the size of the cross section of the detection device body 1 perpendicular to the longitudinal direction of the detection device body 1, and a second through-hole 22b that extends from the first through-hole 22a to the other end face 20b of the high-voltage takeout lead terminal insulating member 20 so that the cross section of the second through-hole 22a perpendicular to its extension direction is larger than that of the first through-hole 22a on the side of the detection device body 1 where the high-voltage takeout lead terminal 11a is disposed.

According to this configuration, when inserting the detection device body 1 into the high-voltage takeout lead terminal insulating member 20 from the other end face 20b of the high-voltage takeout lead terminal insulating member 20, one end 1a of the detection device body 1 can be exposed from the high-voltage takeout lead terminal insulating member 20 while receiving a line 19 connected to the high-voltage takeout lead terminal 11a disposed on the surface of detection device body 1 in the second through-hole 22b.

The insulating ceramic that forms the high-voltage takeout lead terminal insulating member 20 is preferably at least one ceramic selected from the group consisting of alumina, cordierite, mullite, glass, zirconia, magnesia, titania, and silicon. Among these, alumina, cordierite, and zirconia are more preferable.

The length of the high-voltage takeout lead terminal insulating member 20 (i.e., the length of the high-voltage takeout lead terminal insulating member 20 from one end face 20a to the other end face 20b) is not particularly limited insofar as the high-voltage takeout lead terminal insulating member 20 covers at least the high-voltage takeout lead terminal 11a disposed on the surface of detection device body 1, and allows an area of one end of the detection device body 1 in which the through-hole 2 is formed to be exposed to the outside. The length of the high-voltage takeout lead terminal insulating member 20 is preferably 5 to 35%, and more preferably 10 to 30% of the longitudinal length of the detection device body 1. This effectively prevents dielectric breakdown from the high-voltage takeout lead terminal 11a.

Since the high-voltage takeout lead terminal insulating member 20 is fitted into and held by the detection device outer tube 30 that serves as an outer tube of the particulate matter detection device 100, the cross section of the high-voltage takeout lead terminal insulating member 20 perpendicular to the longitudinal direction of the high-voltage takeout lead terminal insulating member 20 preferably has an outer circumferential shape that allows the high-voltage takeout lead terminal insulating member 20 to be closely fitted into the detection device outer tube 30 with no clearance therebetween. This makes it possible to stably hold the high-voltage takeout lead terminal insulating member 20 and the detection device body 1.

The thickness of the area of the high-voltage takeout lead terminal insulating member 20 in which the second through-hole 22b is formed is preferably 2.0 mm or more.

When disposing (fitting) the detection device body 1 in the through-hole 22 of the high-voltage takeout lead terminal insulating member 20, it is preferable to cover the high-voltage takeout lead terminal 11a of the detection device body 1 and the line 19 connected to the takeout lead terminal 11a with an electrically insulating adhesive or the like. This effectively prevents dielectric breakdown from the high-voltage takeout lead terminal 11a. Examples of the adhesive include an adhesive that contains alumina as main component and an alcohol solvent, and the like.

An opening 26 that is formed in the second through-hole 22b between the detection device body 1 and the high-voltage takeout lead terminal insulating member 20 may be filled with an electrically insulating inorganic powder. This more effectively prevents dielectric breakdown between the high-voltage takeout lead terminal 11a and the detection device outer tube 30 while effectively preventing a creeping discharge due to the high-voltage takeout lead terminal 11a and another takeout lead terminal such as low-voltage takeout lead terminal 12a. The inorganic powder as mentioned above may be at least one electrically insulating inorganic powder selected from the group consisting of talc powder, calcium carbonate powder, dolomite powder, and mica powder.

When filling the opening 26 that is formed in the second through-hole 22b between the detection device body 1 and the high-voltage takeout lead terminal insulating member 20 with the inorganic powder, it is preferable to compact the inorganic powder provided in the opening 26 by applying a pressure from the other end face 20b of the high-voltage takeout lead terminal insulating member 20.

The opening 26 that is formed in the second through-hole 22b between the detection device body 1 and the high-voltage takeout lead terminal insulating member 20 may be filled with an electrically insulating adhesive. This achieves the same effect as that achieved when filling the opening 26 with the inorganic powder.

The particulate matter detection device 100 according to this embodiment may further include a first cap member 23 that is disposed inside the detection device outer tube 30 to come in contact with one end face 20a of the high-voltage takeout lead terminal insulating member 20, and a second cap member 24 that is disposed inside the detection device outer tube 30 to come in contact with the other end face 20b of the high-voltage takeout lead terminal insulating member 20.

The first cap member 23 and the second cap member 24 ensure that the high-voltage takeout lead terminal insulating member 20 and the detection device body 1 are reliably held inside the detection device outer tube 30. FIG. 1C shows an example in which the first cap member 23 has two cap members including a cap member 23a that is formed of a ceramic and a cap member 23b that is formed by compacting a talc powder, and the second cap member 24 has three cap members including a cap member 24a that is formed of a ceramic, a cap member 24b that is formed by compacting a talc powder, and a cap member 24c that is formed of a ceramic.

Leakage of the compacted talc powder can be prevented by disposing the cap member (first cap member 23 and second cap member 24). A situation in which the high-voltage line connection section is disconnected due to the talc powder that has entered the high-voltage takeout lead terminal insulating member 20 when applying a pressure to compact the talc powder can also be prevented.

### [1-1g] Detection device outer tube

The detection device outer tube 30 is formed of a metal material, and is disposed to cover at least the high-voltage takeout lead terminal insulating member 20 while allowing an area of one end 1a of the detection device body 1 in which the through-hole 2 is formed to be exposed, the detection device body 1 being fitted into the high-voltage takeout lead terminal insulating member 20.

Such detection device outer tube 30 allows the particulate matter detection device 100 to be reliably installed in a pipe through which exhaust gas flows in a state in which an area of the detection device body 1 in which the through-hole 2 is formed is inserted into the pipe. For example, a threaded hole having a diameter almost equal to that of the detection device outer tube is formed in a pipe in which flue gas or diesel engine exhaust gas passes, an area of one end of the detection device body in which the through-hole is formed is inserted into the threaded hole, and the detection device outer tube is secured on the threaded hole to install the particulate matter detection device (not shown).

The detection device outer tube may be formed of a metal material such as iron, nickel, platinum, copper, gold, molybdenum, or tungsten. The detection device outer tube may be formed of an alloy such as stainless steel or kovar. It is preferable to use stainless steel that exhibits excellent corrosion resistance and thermal conductivity and is inexpensive.

As shown in FIGS. 1A to 1C, a washer 25 having a given shape may be disposed inside the detection device outer tube 30 adjacent to the second cap member 24, and the rear area of the detection device outer tube 30 (i.e., the end of the detection device outer tube 30 on the side of the other end face 30b) may be swaged so that the first cap member 23, the high-voltage takeout lead terminal insulating member 20, and the second cap member 24 strongly adhere to each other, for example. This causes the talc powder that forms the cap members 23b and 24b and the inorganic powder provided in the second through-hole 22b to be further compacted so that dielectric breakdown or unnecessary creeping discharge can be more effectively prevented.

The shape of the detection device outer tube 30 is not particularly limited insofar as the high-voltage takeout lead terminal insulating member can be disposed (fitted) in the detection device outer tube 30. The detection device outer tube 30 may have a polygonal cross-sectional shape (prism) or the like. The length of the detection device outer tube 30 (i.e., the length of the detection device outer tube 30 from one end face 30a to the other end face 30b) is not particularly limited. The length of the detection device outer tube 30 is preferably 50 to 100%, and more preferably 80 to 90% of the length of the detection device body 1 in the longitudinal direction of the detection device body 1.

### [2] Method of producing particulate matter detection device

Next, a method of producing the particulate matter detection device according to this embodiment is described below taking an example of producing the particulate matter detection device 100 shown in FIGS. 1A to 1C.

### [2-1] Preparation of forming raw material

Firstly, the sensor section 40 including the detection device body 1 is formed by stacking a plurality of tape-shaped ceramic (ceramic sheets). Specifically, at least one ceramic raw material (dielectric raw material) selected from the group consisting of alumina, a cordierite-forming raw material, mullite, glass, zirconia, magnesia, and titania and other components used as a forming raw material are mixed to each other to prepare a slurried forming raw material. The above-mentioned raw material is preferable as the ceramic raw material (dielectric raw material). Note that the ceramic raw material is not limited thereto. As the components other than the ceramic raw material, it is preferable to use a binder, a plasticizer, a dispersant, a dispersion medium, and the like.

The binder is not particularly limited. An aqueous binder or a non-aqueous binder may be used. As the aqueous binder, methyl cellulose, polyvinyl alcohol, polyethylene oxide, or the like may be suitably used. As the non-aqueous binder, polyvinyl butyral, an acrylic resin, polyethylene, polypropylene, or the like may be suitably used. Preferable examples of the acrylic resin include a (meth)acrylic resin, a (meth)acrylate ester copolymer, an acrylate-methacrylate ester copolymer, and the like.

The binder is preferably added in an amount of 3 to 20 parts by mass, and more preferably 6 to 17 parts by mass with respect to 100 parts by mass of the dielectric raw material. If the amount of the binder is within the above range, cracks or the like do not occur when forming the slurried forming raw material into a green sheet, or when drying and firing the green sheet.

As the plasticizer, glycerine, polyethylene glycol, dibutyl phthalate, di(2-ethylhexyl) phthalate, diisononyl phthalate, or the like may be used.

The plasticizer is preferably added in an amount of 30 to 70 parts by mass, and more preferably 45 to 55 parts by mass with respect to 100 parts by mass of the binder added. If the amount of the plasticizer is more than 70 parts by mass, the resulting green sheet becomes too soft and may be deformed when processing the green sheet. If the amount of the plasticizer is less than 30 parts by mass, the resulting green sheet becomes too hard so that cracks may occur when merely bending the green sheet, resulting in the deterioration in the handling capability

As the dispersant, an aqueous dispersant such as anionic surfactant, wax emulsion, or pyridine, or a non-aqueous dispersant such as fatty acid, phosphate, or synthetic surfactant may be used.

The dispersant is preferably added in an amount of 0.5 to 3 parts by mass, and more preferably 1 to 2 parts by mass with respect to 100 parts by mass of the dielectric raw material. If the amount of the dispersant is less than 0.5 parts by mass, the dispersibility of the dielectric raw material may decrease. As a result, the green sheet may produce cracks or the like. If the amount of the dispersant is more than 3 parts by mass, the amount of impurities may increase during firing although the dispersibility of the dielectric raw material remains the same.

As the dispersion medium, water or the like may be used. The dispersion medium is preferably added in an amount of 50 to 200 parts by mass, and more preferably 75 to 150 parts by mass with respect to 100 parts by mass of the dielectric raw material.

The above materials are sufficiently mixed using an alumina pot and alumina cobblestone to prepare a slurried forming raw material for forming a green sheet. The forming raw material slurry may be prepared by mixing the materials by ball milling using a mono ball.

Next, the slurried forming raw material for forming a green sheet is stirred under reduced pressure to remove bubbles, and the viscosity of the slurried forming raw material is adjusted to a given value. The viscosity of the slurried forming raw material thus prepared is preferably 2.0 to 6.0 Pa·s, more preferably 3.0 to 5.0 Pa·s, and particularly preferably 3.5 to 4.5 Pa·s. The slurry can be easily formed into a sheet by adjusting the viscosity of the slurry to a value within the above range. It may be difficult to form the slurry into a sheet if the viscosity of the slurry is too high or too low. The viscosity of the slurry refers to a value measured using a Brookfield viscometer.

### [2-2] Forming process

The slurried forming raw material obtained by the above method is formed into a tape to obtain a green sheet that extends in one direction. The forming process method is not particularly limited insofar as a green sheet can be formed by forming the forming raw material into a sheet. The conventional methods such as a doctor blade method, a press forming method, a rolling method, a calender roll method, or the like may be used. A green sheet for forming a through-hole is produced so that a through-hole is formed when stacking the green sheets. The thickness of the green sheet is preferably 50 to 800 µm.

### [2-3] Formation of green sheet laminate

Each electrode (high-voltage electrode, low-voltage electrode, and ground electrode), a line, a heating section, and a takeout lead terminal are formed on the surface of the green sheet thus obtained. For example, a conductive paste for forming each electrode, a line, a heating section, or a takeout lead terminal to be disposed is prepared. The resulting conductive pastes are printed on the green sheet at corresponding positions as shown in FIGS. 3 and 7 to form each electrode (high-voltage electrode 11, low-voltage electrode 12, and ground electrode 14), a line (lines 11b, 12b, 13b, and 14b), the heating section 13, and a takeout lead terminal (takeout lead terminals 11a, 12a, 13a, and 14a).

The above conductive paste may be prepared by adding a binder and a solvent such as terpineol to a powder that contains at least one component selected from the group consisting of gold, silver, platinum, nickel, molybdenum, and tungsten depending on the materials necessary for forming each electrode, line, etc., and sufficiently kneading the mixture using a triple roll mill or the like. The conductive paste may be printed by an arbitrary method. For example, screen printing or the like may be used.

More specifically, a low-voltage electrode is formed at one end of one side of one of the green sheets, and a line that extends from the low-voltage electrode to the other end is formed to obtain a low-voltage electrode green sheet. A high-voltage electrode is formed at one end of one side of another green sheet, and a line that extends from the high-voltage electrode to a position (e.g., intermediate position) between one end and the other end is formed to obtain a high-voltage electrode green sheet. The line connected to the high-voltage electrode is via-connected to a takeout lead terminal disposed on the surface of the detection device body via a heating section green sheet that is formed later.

A cut area that defines a through-hole later is formed in another green sheet at a position at which the cut area overlaps the electrode when stacked on the high-voltage electrode green sheet to obtain a cut area green sheet. A ground electrode may be formed on the cut area green sheet at a position at which the ground electrode overlaps the lines when stacked on the high-voltage electrode green sheet and the low-voltage electrode green sheet. Note that the cut area that later forms a through-hole and the ground electrode may be formed using different green sheets.

A heating section is formed on other two green sheets at a position at which the heating section overlaps the cut area that later defines a through-hole when stacked on the cut area green sheet. A line extending from the heating section to the other end is formed to obtain two heating section green sheets.

A plurality of green sheets thus obtained are stacked according to the configuration of the sensor section 40 shown in FIG 2C to obtain a green sheet laminate.

### [2-4] Firing

The green sheet laminate thus obtained is dried and fired to obtain a sensor section including a detection device body. Specifically, the resulting green sheet laminate is dried at 60 to 150°C, and fired at 1200 to 1600°C to obtain a sensor section. When the green sheet contains an organic binder, the green sheet is preferably debinded at 400 to 800°C before firing.

### [2-5] Production of high-voltage takeout lead terminal insulating member and detection device outer tube

The high-voltage takeout lead terminal insulating member and the detection device outer tube are formed separately from the sensor section. The high-voltage takeout lead terminal insulating member is formed by charging a cylindrical die with a given powder, forming the powder under pressure, firing the powder at a high temperature to obtain an insulating ceramic, and cutting the insulating ceramic thus obtained to have a given shape.

The detection device outer tube is formed by cutting a cylindrical metal or alloy tube to have a given shape.

### [2-6] Assembly of particulate matter detection device

First, lines for electrically being connected to a power supply and a measurement section are connected to each takeout lead terminals of the detection device body (sensor section) produced using the green sheets as explained above. When connecting the line to the high-voltage takeout lead terminal, it is preferable to cover the high-voltage takeout lead terminal and the line connected to the high-voltage takeout lead terminal with an electrically insulating adhesive.

Next, the detection device body (sensor section) is inserted into the through-hole from the other end face of the high-voltage takeout lead terminal insulating member. The detection device body is inserted so that an area of the detection device body in which the through-hole is formed is exposed from one end face of the high-voltage takeout lead terminal insulating member, and the high-voltage takeout lead terminal disposed on the detection device body is covered with the high-voltage takeout lead terminal insulating member.

The opening that is formed in the second through-hole between the detection device body and the high-voltage takeout lead terminal insulating member is optionally filled with an electrically insulating inorganic powder (e.g., talc powder).

The high-voltage takeout lead terminal insulating member is disposed inside the detection device outer tube in a state in which the detection device body is inserted into the through-hole of the high-voltage takeout lead terminal insulating member to obtain a particulate matter detection device. In this case, it is preferable to dispose the cap member on each end of the high-voltage takeout lead terminal insulating member.

For example, a first cap member in which a cap member formed of a ceramic and a cap member obtained by compacting talc particles are disposed in this order is disposed in the detection device outer tube. After disposing the high-voltage takeout lead terminal insulating member into which the detection device body is fitted, a second cap member in which a cap member formed of a ceramic, a cap member obtained by compacting talc particles, and a cap member formed of a ceramic are disposed in this order is disposed in the detection device outer tube. After disposing a washer, the rear area of the detection device outer tube (i.e., the end of the detection device outer tube on the side of the other end face) is swaged so that the first cap member, the high-voltage takeout lead terminal insulating member, and the second cap member strongly adhere to each other to obtain a particulate matter detection device.

According to the above production method, the particulate matter detection device according to this embodiment can be efficiently produced. Note that the method of producing the particulate matter detection device according to this embodiment is not limited to the above method.

### EXAMPLES

The present invention is further described below by way of examples. Note that the present invention is not limited to the following examples.

### Example 1

### (Preparation of forming raw material)

An alumina pot was charged with alumina as dielectric raw material, polyvinyl butyral as binder, di(2-ethylhexyl) phthalate as plasticizer, sorbitan trioleate as dispersant, and an organic solvent (xylene:butanol=6:4 (mass ratio)) as dispersion medium. The components were mixed to prepare a slurried forming raw material for forming a green sheet. 7 parts by mass of the binder, 3.5 parts by mass of the plasticizer, 1.5 parts by mass of the dispersant, and 100 parts by mass of the organic solvent were used with respect to 100 parts by mass of alumina.

The slurried forming raw material thus obtained for forming a green sheet was stirred under reduced pressure to remove bubbles, and the viscosity of the slurried forming raw material was adjusted to 4 Pa·s. The viscosity of the slurry was measured using a Brookfield viscometer.

### (Forming process)

The slurried forming raw material obtained by the above method was formed into a sheet using a doctor blade method. A cut area green sheet was also produced so that a through-hole was formed when stacking the green sheets. The thickness of the green sheet was 250 µm.

Each electrode, a ground electrode, a heating section, each line, and each takeout lead terminal as shown in FIGS. 2B and 3 to 7 were formed on the surface of the resulting green sheet. A conductive paste for forming each electrode, ground electrode, line, and takeout lead terminal was prepared by adding 2-ethylhexanol as solvent, polyvinyl butyral as binder, di(2-ethylhexyl) phthalate as plasticizer, sorbitan trioleate as dispersant, alumina as green sheet common material, and a glass frit as sintering aid to a platinum powder, and sufficiently kneading the mixture using a kneader and a triple roll mill (platinum: alumina:glass frit:2-ethylhexanol:polyvinyl butyral:di(2-ethylhexyl) phthalate:sorbitan trioleate=80:15:5:50:7:3.5:1 (mass ratio)).

A conductive paste for forming the heating section was prepared by adding 2-ethylhexanol as solvent, polyvinyl butyral as binder, di(2-ethylhexyl) phthalate as plasticizer, sorbitan trioleate as dispersant, alumina as green sheet common material, and a glass frit as sintering aid to a tungsten powder, and sufficiently kneading the mixture using a kneader and a triple roll mill (tungsten:alumina:glass frit: 2-ethylhexanol: polyvinyl butyral:di(2-ethylhexyl) phthalate:sorbitan trioleate=75.5:15:5:50:7:3.5:1 (mass ratio)).

Each electrode, the ground electrode, each line, each takeout lead terminal, and the heating section having a given shape were formed by screen printing the pastes obtained by the above methods.

More specifically, a low-voltage electrode was formed at one end of one side of one green sheet, and a line extending from the low-voltage electrode to the other end was formed to obtain a low-voltage electrode green sheet. A high-voltage electrode was formed at one end of one side of another green sheet, and a line extending from the high-voltage electrode to a position (47 mm from the other end) between one end and the other end was formed to obtain a high-voltage electrode green sheet.

A cut area that later defines a through-hole was formed in another green sheet at a position at which the cut area overlaps the electrode when stacked on the high-voltage electrode green sheet, and a ground electrode was formed at a position at which the ground electrode overlaps each electrode to obtain a cut area green sheet. Furthermore heating section was formed on other two green sheets at a position at which the heating section overlaps the cut area that later defines a through-hole when stacked on the cut area green sheet. A line extending from the heating section to the other end was then formed to obtain two heating section green sheets.

A green sheet on which an electrode and the like were not formed was stacked on each of the high-voltage electrode green sheet and the low-voltage electrode green sheet to cover the electrode and the line with the green sheet to obtain electrode-buried green sheets. The cut area green sheet was interposed between the electrode-buried green sheets. The heating section green sheet was then stacked on the electrode-buried green sheet to obtain a green sheet laminate in which the cut area was interposed between the two electrodes (high-voltage electrode and low-voltage electrode) and the ground electrode was interposed between the two lines. Each line and the corresponding takeout lead terminal were via-connected to each other using a conductive paste. The high-voltage takeout lead terminal connected to the high-voltage electrode was formed on the surface of the green sheet laminate to have a size of 2 mm ×3 mm at a position 47 mm from the other end.

The green sheets were stacked under pressure using a heating-type uniaxial press machine to obtain an unfired body composed of green sheet laminate of a sensor section of a particulate matter detection device.

### (Firing)

The green sheet laminate (unfired body of sensor section) thus obtained was dried at 120°C, and fired at 1500°C to obtain a sensor section of a particulate matter detection device. The resulting sensor section was in the shape of a rectangular parallelepiped of 0.7cm × 0.2 cm ×12 cm). The reduced other end of the sensor section had a reduced thickness as shown in FIG 1B. The other end of the sensor section had a width of 4.25 cm and a length of 1.2 cm. The cross-sectional shape of the through-hole in the direction perpendicular to the exhaust gas circulation direction was rectangular of 10 cm × 0.5 cm).

### (Production of high-voltage takeout lead terminal insulating member)

A high-voltage takeout lead terminal insulating member was formed by charging a cylindrical die with an alumina powder, after forming the alumina powder under pressure, firing the alumina powder at a high temperature to obtain an alumina ceramic, and cutting the resulting alumina ceramic to have a given shape.

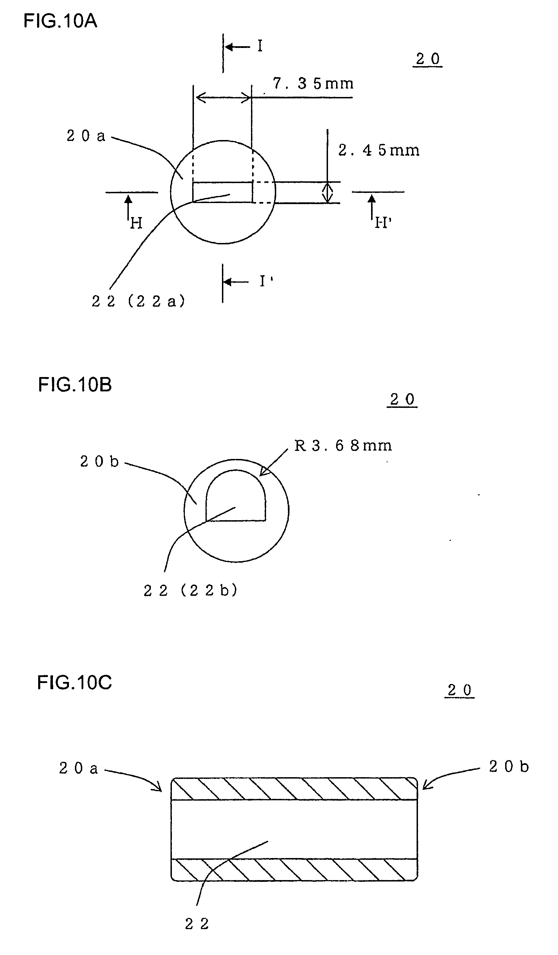

As shown in FIGS. 10A to 10D, The high-voltage takeout lead terminal insulating member thus obtained had a columnar shape having an outer diameter of 12.8 mm, and length of 30 mm. A through-hole 22 that receives the detection device body was formed in the resulting high-voltage takeout lead terminal insulating member. The through-hole 22 included a first through-hole 22a that was formed in the range of 7.0 mm from one end face 20a of the high-voltage takeout lead terminal insulating member 20 so that the cross section of the first through-hole 22a perpendicular to its extension direction had a size (rectangle (7.35×2.45 mm) almost equal to the size of the cross section of the detection device body perpendicular to the longitudinal direction of the detection device body, and a second through-hole 22 that was formed from the first through-hole 22a to the other end face 20b of the high-voltage takeout lead terminal insulating member so that the cross section of the second through-hole 22a perpendicular to its extension direction was larger than that of the first through-hole 22a on the side of the detection device body where the high-voltage takeout lead terminal was disposed. The second through-hole 22a had a cross-sectional shape perpendicular to its extension direction that is obtained by semi-circularly (radius: 3.68 mm) expanding the first through-hole 22a on the side on which the high-voltage takeout lead terminal was disposed.

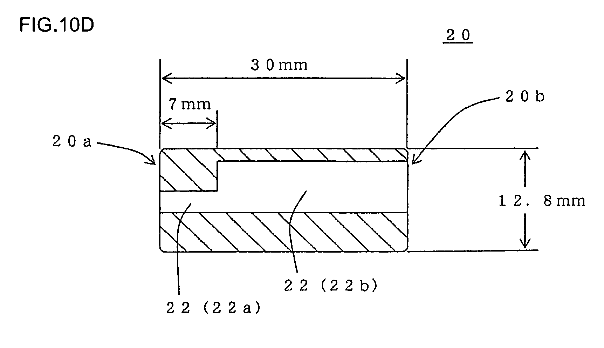

Now, FIG 10A is a plan view showing one end face of the high-voltage takeout lead terminal insulating member of the particulate matter detection device of Example 1, and FIG. 10B is a cross-sectional view showing the other end face of the high-voltage takeout lead terminal insulating member shown in FIG. 10A. Furthermore, FIG. 10C is a cross-sectional view showing a cross section cut along H-H' line of the high-voltage takeout lead terminal insulating member shown in FIG. 10A, and FIG. 10D is a cross-sectional view showing a cross section cut along I-I' line of the high-voltage takeout lead terminal insulating member shown in FIG 10A.

### (Production of detection device outer tube)

The detection device outer tube was formed by cutting a cylindrical stainless steel tube to have an outer diameter of 14 mm (inner diameter of 13 mm) and a length of 70 mm.

### (Assembly of particulate matter detection device)

A line to be electrically connected to a power supply and a measurement section was connected to each takeout lead terminal of the detection device body (sensor section). The detection device body was inserted into the through-hole of the high-voltage takeout lead terminal insulating member from the other end face (second through-hole side) so that one end of the detection device body was exposed from one end of the high-voltage takeout lead terminal insulating member to a length of 51 mm. When connecting the line to the high-voltage takeout lead terminal, the high-voltage takeout lead terminal and the line connected to the high-voltage takeout lead terminal were covered with an electrically insulating adhesive (adhesive containing alumina (main component) and alcohol solvent).

The high-voltage takeout lead terminal insulating member was disposed inside the detection device outer tube in a state in which the detection device body was inserted into the through-hole of the high-voltage takeout lead terminal insulating member to obtain a particulate matter detection device. In Example 1, the opening formed in the second through-hole between the detection device body and the high-voltage takeout lead terminal insulating member was filled with talc powder.

### (Discharge power supply)

As a discharge power supply, a pulse power supply and a DC power supply were connected to the takeout lead terminals of the electrodes.

### (Measurement section)

An impedance analyzer (manufactured by Agilent Technologies) was used as a measurement section that measures the impedance between the electrodes. The measurement section was connected to the takeout lead terminals of the electrodes. The takeout lead terminal of the ground electrode was grounded.

### (Particulate matter measurement test)

The particulate matter detection device thus obtained was installed in an exhaust pipe connected to a diesel engine. A direct-injection diesel engine having displacement of 2000 cc was used as the diesel engine. Exhaust gas was generated at an engine speed of 1500 rpm, a torque of 24 N·m, an exhaust gas recirculation (EGR) rate of 50%, an exhaust gas temperature of 200°C, and an air intake of 1.3 m³/min (room temperature).

The amount of particulate matter contained in the exhaust gas measured by a smoke meter ("4158" manufactured by AVL) was 2.0 mg/m³. The particulate matter was detected as follows. Before charging and collecting particulate matter, the initial capacitance (pF) between the pair of electrodes was measured for one minute six times in a state in which exhaust gas was discharged from the diesel engine. Then, after charging and collecting particulate matter for one minute under the above conditions, the charging/collection operation was stopped. Again, the capacitance (pF) (capacitance between the pair of electrodes after collecting particulate matter for one minute) was measured for one minute six times. The average value of the six measured values was calculated for each of the initial capacitance and the capacitance after collecting particulate matter for one minute. The mass of the collected particulate matter was calculated from the difference between the initial capacitance and the capacitance after collecting particulate matter for one minute.

A calibration curve was drawn in advance for a change in capacitance with respect to the adsorption amount of particulate matter, and the mass of the collected particulate matter was calculated using the calibration curve. Note that the particulate matter was not burnt using the heating section (heater) during the measurement. When charging and collecting the particulate matter, a DC voltage of 2.0 kV was applied using a high-voltage power supply. The capacitance between the electrodes was measured at an applied voltage (AC) of 2 V and a frequency of 10 kHz. The results are shown in Table 1.

### (Withstand high voltage test)

A heater wire was wound around the detection device outer tube of the particulate matter detection device, and the particulate matter detection device was externally heated. Then, an alternating-current voltage of 5 kV was applied between the high-voltage takeout lead terminal and the detection device outer tube for one minute under the following temperature condition, and the insulation resistance value (MΩ) between the high-voltage takeout lead terminal and the detection device outer tube was measured. The measurement results are shown in Table 1.

### (Withstand high voltage test conditions)

Measuring instrument: "3158 AC Withstanding voltage Hi Tester" (manufactured by HIOKI)
Applied voltage: AC 5 kV
Measurement atmosphere: air
Four Temperature condition (measurement temperature): room temperature, 200°C, 300°C, and 400°C

**TABLE 1**

| | Particulate matter measurement test (capacitance (pF)) | | Withstand high voltage test (insulation resistance (MΩ)) | | | |
|---|---|---|---|---|---|---|
| | Initial | After collecting particulate matter for one minute | Measurement temperature | | | |
| | | | Room temperature | 200°C | 300°C | 400°C |
| Example 1 | 0.58 | 0.87 | 300 | 298 | 295 | 290 |
| Example 2 | 0.58 | 0.87 | 258 | 255 | 250 | 242 |
| Comparative Example 1 | 0.58 | 0.58 | Discharge occurred (dielectric breakdown) | bad | bad | bad |

### Example 2

A particulate matter detection device was produced in the same manner as in Example 1, except that the high-voltage takeout lead terminal insulating member had a columnar shape having an outer diameter of 12.8 mm and a length of 14 mm, and the opening formed in the second through-hole between the detection device body and the high-voltage takeout lead terminal insulating member was filled with an electrically insulating adhesive. The particulate matter detection device was subjected to the withstand high voltage test in the same manner as in Example 1. The results are shown in Table 1. The electrically insulating adhesive was the same as the adhesive used to cover the high-voltage takeout lead terminal disposed on the detection device body and the line connected to the high-voltage takeout lead terminal.

### Comparative Example 1

A particulate matter detection device was produced in the same manner as in Example 1, except that the high-voltage takeout lead terminal insulating member was not used, the detection device body was inserted into the detection device outer tube after covering the high-voltage takeout lead terminal disposed on the detection device body and the line connected to the high-voltage takeout lead terminal with an electrically insulating adhesive, the opening between the detection device outer tube and the detection device body was filled with a talc powder, followed by compaction, and a cap member was disposed at each end of the detection device outer tube. The particulate matter detection device of Comparative Example 1 was subjected to the withstand high voltage test in the same manner as in Example 1. The results are shown in Table 1.

### (Results)

Table 1 clearly shows the difference between the initial capacitance (impedance) and the capacitance after collecting particulate matter in the particulate matter measurement test conducted on the particulate matter detection device of Example 1. This suggests that an increase in the amount of particulate matter in exhaust gas can be detected by performing an impedance measurement for one minute. Since the particulate matter detection device of Example 2 had the same sensor section as that of Example 1, a clear difference in capacitance (impedance) was obtained in the particulate matter measurement test. In the particulate matter detection device of Comparative Example 1, dielectric breakdown occurred around the high-voltage takeout lead terminal when applying a voltage for charging and collecting particulate matter. As a result, particulate matter contained in exhaust gas could not be collected, and consequently that the capacitance (impedance) did not change when performing an impedance measurement for one minute.

In addition, in the particulate matter detection device es of Examples 1 and 2, a discharge did not occur between the high-voltage takeout lead terminal and the detection device outer tube under each temperature condition employed in the withstand high voltage test, and consequently that the high-voltage takeout lead terminal could be electrically insulated from the detection device outer tube. In the particulate matter detection device of Example 2 in which the length of the high-voltage takeout lead terminal insulating member was reduced as compared with Example 1, dielectric breakdown did not occur at 400°C although the insulation resistance decreased as compared with Example 1. The above results suggest that insulating properties equal to those of Example 1 can be achieved in Example 2 in which the length of the high-voltage takeout lead terminal insulating member was reduced, and the length of the detection device body (sensor section) can be reduced by reducing the length of the high-voltage takeout lead terminal insulating member.

In the particulate matter detection device of Comparative Example 1, a discharge occurred between the high-voltage takeout lead terminal and the detection device outer tube at room temperature in the withstand high voltage test so that dielectric breakdown occurred.

The particulate matter detection device according to the present invention may be suitably used to immediately detect the occurrence of defects and to recognize the abnormality of a DPF. This makes it possible to contribute to preventing air pollution.

## Claims

1. A particulate matter detection device comprising:
a detection device body that extends in one direction and has at least one through-hole that is formed at one end of the detection device body;
at least one pair of electrodes that are buried in the wall of the detection device body that defines the through-hole, and are covered with a dielectric, the at least one pair of electrodes including a low-voltage electrode and a high-voltage electrode;
a low-voltage takeout lead terminal that is electrically connected to the low-voltage electrode, and disposed at the other end of the detection device body;
a high-voltage takeout lead terminal that is electrically connected to the high-voltage electrode, and disposed on the surface of the detection device body at a position between the one end and the other end of the detection device body;
a high-voltage takeout lead terminal insulating member that has a tubular shape and is formed of an electrically insulating ceramic, a through-hole being formed in the high-voltage takeout lead terminal insulating member from one end face to the other end face of the high-voltage takeout lead terminal insulating member, the detection device body being inserted into the through-hole so that at least an area of the detection device body in which the high-voltage takeout lead terminal is disposed is covered with the high-voltage takeout lead terminal insulating member; and
a detection device outer tube that is formed of a metal material, and disposed to cover at least the high-voltage takeout lead terminal insulating member while allowing an area of the one end of the detection device body in which the through-hole is formed to be exposed,
the particulate matter detection device being configured so that charged particulate matter contained in a fluid that flows into the through-hole that is formed at the one end of the detection device body, or particulate matter that is contained in a fluid that flows into the through-hole and is charged by a discharge that occurs in the through-hole due to application of a voltage between the pair of electrodes, can be electrically adsorbed on the wall surface of the through-hole, and the particulate matter adsorbed on the wall surface of the through-hole can be detected by measuring a change in electrical properties of the wall that defines the through-hole.

2. The particulate matter detection device according to claim 1,
wherein the through-hole that is formed in the high-voltage takeout lead terminal insulating member includes:
a first through-hole that is formed in a given range from the one end face of the high-voltage takeout lead terminal insulating member so that the cross section of the first through-hole perpendicular to its extension direction has a size almost equal to the size of the cross section of the detection device body perpendicular to the longitudinal direction of the detection device body; and
a second through-hole that is formed from the first through-hole to the other end face of the high-voltage takeout lead terminal insulating member so that the cross section of the second through-hole perpendicular to its extension direction is larger than that of the first through-hole on the side of the detection device body where the high-voltage takeout lead terminal is disposed.

3. The particulate matter detection device according to claim 2, wherein an opening that is formed in the second through-hole between the detection device body and the high-voltage takeout lead terminal insulating member is filled with an electrically insulating inorganic powder.

4. The particulate matter detection device according to claim 2 or 3, further comprising:
a first cap member that is disposed inside the detection device outer tube to come in contact with the one end face of the high-voltage takeout lead terminal insulating member; and
a second cap member that is disposed inside the detection device outer tube to come in contact with the other end face of the high-voltage takeout lead terminal insulating member.

5. The particulate matter detection device according to any one of claims 1 to 4, wherein the high-voltage takeout lead terminal insulating member is formed of at least one ceramic selected from the group consisting of alumina, cordierite, mullite, glass, zirconia, magnesia, titania, and silicon.

6. The particulate matter detection device according to any one of claims 1 to 5, wherein a line is electrically connected to the high-voltage takeout lead terminal disposed on the detection device body, and the high-voltage takeout lead terminal and the line are covered with an electrically insulating adhesive.
